(19) Europäisches Patentamt / European Patent Office / Office européen des brevets

(11) **EP 4 318 648 A1**

(12) **EUROPEAN PATENT APPLICATION**
published in accordance with Art. 153(4) EPC

(43) Date of publication:
**07.02.2024 Bulletin 2024/06**

(21) Application number: **22778381.8**

(22) Date of filing: **15.02.2022**

(51) International Patent Classification (IPC):
**H01M 4/133** (2010.01)    **H01M 4/587** (2010.01)
**H01M 10/0525** (2010.01)

(52) Cooperative Patent Classification (CPC):
Y02E 60/10

(86) International application number:
**PCT/CN2022/076319**

(87) International publication number:
**WO 2022/206196 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021 CN 202110350908**

(71) Applicant: **Ningde Amperex Technology Limited Zhangwan Town, Jiaocheng District Ningde City Fujian 352100 (CN)**

(72) Inventors:
• **TANG, Jia**
  **Ningde City, Fujian 352100 (CN)**
• **MIAO, Liyun**
  **Ningde City, Fujian 352100 (CN)**

(74) Representative: **Icosa**
  **83 avenue Denfert-Rochereau**
  **75014 Paris (FR)**

(54) **ELECTROCHEMICAL DEVICE AND ELECTRONIC DEVICE**

(57)    Embodiments of this application provide an electrochemical device and an electronic device. The electrochemical device includes a positive electrode, a negative electrode, and a separator. The negative electrode includes a negative electrode current collector and a negative electrode active material layer located on the negative electrode current collector. A cross-section porosity at a depth of 10 $\mu$m from a surface of the negative electrode active material layer in a direction toward and perpendicular to the negative electrode current collector is $X_{10}$, satisfying $5\% \leq X_{10} \leq 25\%$, where the surface faces away from the negative electrode current collector. In some embodiments of this application, the effect of the electrolytic solution infiltrating the negative electrode active material layer is improved, and an ion transmission channel is provided, thereby helping to reduce impedance and suppress lithium plating.

Current collector

FIG. 1

EP 4 318 648 A1

**Description**

**CROSS-REFERENCE TO RELATED APPLICATIONS**

This application is based on and claims priority to Chinese Patent Application No. 202110350908.5, filed on March 31, 2021 and entitled "ELECTROCHEMICAL DEVICE AND ELECTRONIC DEVICE", which is incorporated herein by reference in its entirety.

**TECHNICAL FIELD**

This application relates to the field of electrochemical energy storage, and in particular, to an electrochemical device and an electronic device.

**BACKGROUND**

In recent years, with rapid development of electronic products and electric vehicles, higher requirements are posed on large-current charging and discharging of an electrochemical device (such as a lithium-ion battery). A superficial porosity of a negative electrode of the electrochemical device is reduced after the negative electrode is calendered, thereby deteriorating ion conductivity and infiltration performance, thereby adversely affecting the rate performance of the electrochemical device.

Electrochemical devices, such as a lithium-ion battery, are widely used in consumer electronic devices such as a notebook computer and a mobile phone as well as electric devices such as an unmanned aerial vehicle and an electric vehicle. As users pose higher requirements on the electrochemical devices, a higher charging speed of the electrochemical devices is required. Currently, the negative electrode in an electrochemical device is calendered before being put in use. After the calendering, the porosity of the negative electrode is reduced, thereby deteriorating ion conductivity and infiltration performance of an electrolytic solution.

**SUMMARY**

Embodiments of this application provide an electrochemical device and an electronic device.

The electrochemical device provided in this application includes: a positive electrode, a negative electrode, and a separator. The negative electrode includes a negative electrode current collector and a negative electrode active material layer located on the negative electrode current collector. A cross-section porosity at a depth of 10 $\mu$m from a surface of the negative electrode active material layer in a direction toward and perpendicular to the negative electrode current collector is $X_{10}$, satisfying $5\% \leq X_{10} \leq 25\%$, where the surface faces away from the negative electrode current collector.

In some embodiments, a cross-section porosity at depths of 10 to 20 $\mu$m from the surface in the direction toward and perpendicular to the negative electrode current collector is $X_{10-20}$, satisfying $10\% \leq X_{10-20} \leq 30\%$.

In some embodiments, a cross-section porosity at depths that are greater than 20 $\mu$m from the surface of the negative electrode active material layer and that extend to a bottom of the negative electrode active material layer in the direction toward and perpendicular to the negative electrode current collector is $X_{>20}$, satisfying $15\% \leq X_{>20} \leq 40\%$, where the bottom is close to the negative electrode current collector.

In some embodiments, at least one of the following conditions (a) to (c) is satisfied: (a) a surface porosity of the negative electrode active material layer is $X_{surface}$, and $2\% \leq X_{surface} \leq 15\%$; (b) a compacted density of the negative electrode active material layer is 1.35 g/cm$^3$ to 1.70 g/cm$^3$; and (c) a single-side thickness of the negative electrode active material layer is 40 $\mu$m to 120 $\mu$m.

In some embodiments, the negative electrode active material layer contains a negative electrode material. The negative electrode material satisfies at least one of the following conditions (d) to (i): (d) a surface of the negative electrode material contains a defect; (e) the surface of the negative electrode material contains amorphous carbon; (f) the surface of the negative electrode material contains a C-X structure, where X is at least one selected from an H, N, S, B, P, O, Cl, or F element; (g) a particle size $D_{v50}$ of the negative electrode material satisfies: 12 $\mu$m $\leq D_{v50} \leq$ 20 $\mu$m; (h) a specific surface area of the negative electrode material is 0.5 m$^2$/g to 7.0 m$^2$/g; and (i) a compacted density of powder of the negative electrode material is greater than or equal to 1.85 g/cm$^3$.

In some embodiments, when 1 $\mu$L of electrolytic solution is dropped onto the surface of the negative electrode active material layer and keeps infiltrating for 5 seconds, a contact angle between an electrolyte droplet and the negative electrode active material layer is 0° to 90°.

In some embodiments, a result of a Raman test performed on particles in a 100 $\mu$m $\times$ 100 $\mu$m area of the negative electrode active material layer satisfies: $0.2 \leq I_d/I_g \leq 0.8$, where $I_d$ is a peak intensity of the particles of the negative electrode active material layer at 1350 cm$^{-1}$; and $I_g$ is a peak intensity of the particles of the negative electrode active material layer at 1580 cm$^{-1}$.

In some embodiments, the negative electrode material includes primary particles and secondary particles. A ratio of the number of primary particles to the number of secondary particles is 1:9 to 5:5.

In some embodiments, an average particle size of the primary particles is 5 to 10 $\mu$m.

In some embodiments, the negative electrode active material layer further includes a binder. The binder includes at least one of polyvinylidene difluoride, poly(vinylidene difluoride-co-hexafluoropropylene), polyamide, polyacrylonitrile, polyacrylate, polyacrylic acid, polyacrylic acid sodium salt, sodium carboxymethyl cellulose, polyvinylpyrrolidone, polyvinyl ether, polymethyl methacrylate, polytetrafluoroethylene, polyhexafluoropropylene, styrene butadiene rubber, acrylate, or epoxy resin.

In some embodiments, an electrolytic solution is further included. The electrolytic solution includes a solvent, a lithium salt, and an additive. The solvent includes carboxylate. The additive includes at least one of fluoroethylene carbonate, $LiBF_4$, or ethylene sulfate. The lithium salt includes $LiPF_6$.

This application further provides an electronic device, including any one of the electrochemical devices described above.

Embodiments of this application provide an electrochemical device and an electronic device. The electrochemical device includes a positive electrode, a negative electrode, and a separator. The negative electrode includes a negative electrode current collector and a negative electrode active material layer located on the negative electrode current collector. A cross-section porosity at a depth of 10 $\mu$m from a surface of the negative electrode active material layer in a direction toward and perpendicular to the negative electrode current collector is $X_{10}$, satisfying $5\% \leq X_{10} \leq 25\%$, where the surface faces away from the negative electrode current collector. In some embodiments of this application, the effect of the electrolytic solution infiltrating the negative electrode active material layer is improved, and an ion transmission channel is provided, thereby helping to reduce impedance and suppress lithium plating.

## BRIEF DESCRIPTION OF DRAWINGS

FIG. 1 is cross-sectional view of a negative electrode sectioned along a direction perpendicular to a negative electrode current collector according to some embodiments of this application;
FIG. 2 is a schematic diagram derived from FIG. 1 by processing in software; and
FIG. 3 is a schematic diagram of performing porosity statistics in Image J software with respect to the cross-sectional view in FIG. 2.

## DETAILED DESCRIPTION

The following embodiments enable a person skilled in the art to understand this application more comprehensively, but without limiting this application in any way.

An electrochemical device is provided in some embodiments of this application. The electrochemical device includes: a positive electrode, a negative electrode, and a separator. The negative electrode includes a negative electrode current collector and a negative electrode active material layer located on the negative electrode current collector. The negative electrode active material layer may be located on a single side or both sides of the negative electrode current collector. A cross-section porosity at a depth of 10 $\mu$m from a surface of the negative electrode active material layer in a direction toward and perpendicular to the negative electrode current collector (that is, a direction oriented from the surface of the negative electrode active material layer toward the negative electrode current collector) is $X_{10}$ (that is, a cross-section porosity in a region that extends from the surface to a depth of 10 $\mu$m beneath the surface), satisfying $5\% \leq X_{10} \leq 25\%$, where the surface faces away from the negative electrode current collector. It needs to be noted that the surface of the negative electrode active material layer is a surface exposed outside when the negative electrode is disassembled. Oppositely, a surface close to the negative electrode current collector is a bottom. The cross-section porosity at a depth of 10 $\mu$m from the surface in the direction toward the negative electrode current collector is a porosity of a sectional plane, also known as a cross section, formed by sectioning along a direction perpendicular to the negative electrode current collector in a region that extends from the surface to a depth of 10 $\mu$m.

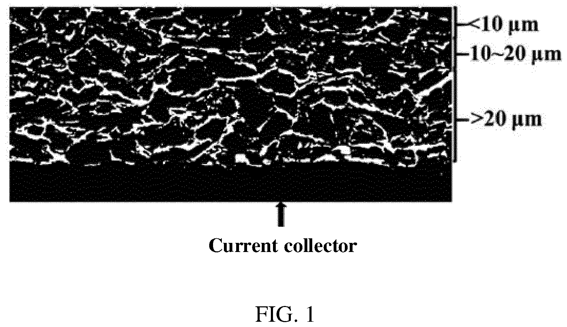

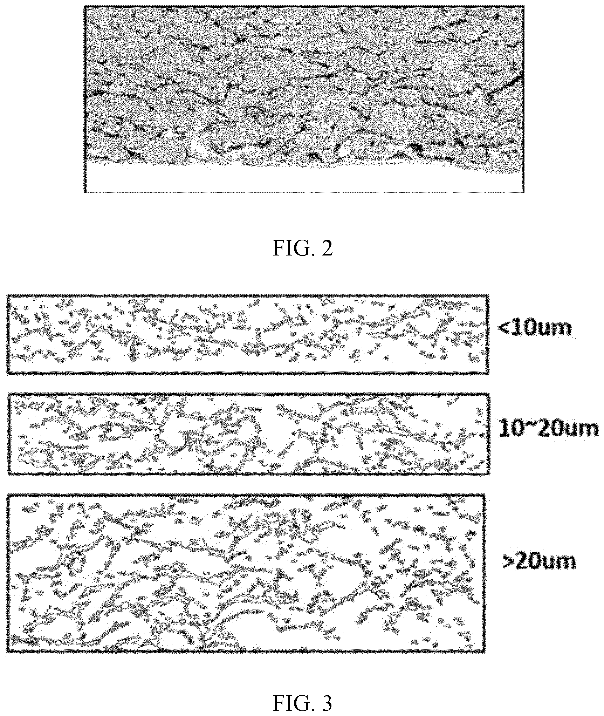

In some embodiments of this application, the thickness of the negative electrode active material layer is greater than 10 $\mu$m. In testing the cross-section porosity, the negative electrode may be cut first along the direction perpendicular to the negative electrode current collector, so as to obtain a cross section (as shown in FIG. 1) of the negative electrode active material layer. Then a position to be tested is selected on the cross section. The test area may be selected as required depending on the cross section. An image that distinctly shows light and shade contrast between the particles and the pores of the negative electrode active material layer is obtained (as shown in FIG. 2) from a composition contrast image of backscattered electrons by using widerange image stitching software Maps installed on the Apero S electron microscope manufactured by Thermo Fisher Scientific, where the voltage is set to 2 KV, the beam current is set to 0.2 nA, and the image magnification is set to 1000. The image is processed by Image J software in the following way: First, setting the image to a grayscale image, and then selecting a Threshold option in the software to binarize the image, whereupon the negative electrode is displayed as a black region and the pores are displayed as a white region; and then using a rectangle box in the software to select a region for analyzing the particles. The software automatically calculates the percentage of area of the pores in the entire image to obtain a porosity (as shown in FIG. 3). In a process of preparing the electrochemical device, calendering is required. During the calendering, the porosity of the negative electrode active material layer decreases. If the porosity of the negative electrode active material layer is excessively high, the volumetric energy density is relatively low. If the porosity of the negative electrode active material layer is excessively low, the infiltration effect of the electrolytic solution is affected, and the ion transmission channel is affected. In some embodiments, the cross-section porosity varies at different depths beneath the surface of the negative electrode active material layer. The cross-section porosity in a region extending from the surface of the negative electrode active material layer to a depth of 10 $\mu$m beneath the surface of the negative electrode active material layer satisfies 5% $\leq X_{10}$ $\leq$ 25%, thereby ensuring an appropriate porosity while maximally increasing the volumetric energy density. In this way, ions can be transmitted and the electrolytic solution can exert the infiltration effect. In some embodiments of this application, a good infiltration effect of the electrolytic solution can be ensured on the basis of ensuring an appropriate volumetric energy density, thereby increasing the ion transmission speed, helping to improve the kinetic performance and rate performance of the electrochemical device, and further helping to increase the charging speed of the electrochemical device.

In some embodiments of this application, the cross-section porosity at depths of 10 to 20 $\mu$m from the surface of the negative electrode active material layer to the negative electrode current collector in the direction perpendicular to the negative electrode current collector is $X_{10-20}$, where 10% $\leq X_{10-20} \leq$ 30%. The cross-section porosity at depths that are greater than 20 $\mu$m from the surface of the negative electrode active material layer and that extend to the bottom of the negative electrode active material layer in the direction perpendicular to the negative electrode current collector is $X_{>20}$, where the direction is perpendicular to the negative electrode current collector and the bottom is close to the negative electrode current collector, and 15% $\leq X_{>20} \leq$ 40%. In some embodiments, along the direction perpendicular to the negative electrode current collector from the surface of the negative electrode active material layer, with the increase of the depth of the negative electrode active material layer, the ion transmission distance increases, and the electrolytic can hardly infiltrate the negative electrode active material layer. Therefore, the cross-section porosity at depths of 10 to 20 $\mu$m from the surface of the negative electrode active material layer in the direction perpendicular to the negative electrode current collector satisfies 10% $\leq X_{10-20} \leq$ 30%, and the cross-section porosity at depths that are greater than 20 $\mu$m from the surface of the negative electrode active material layer and that extend to a bottom of the negative electrode active material layer in the direction perpendicular to the negative electrode current collector satisfies 15 % $\leq X_{>20} \leq$ 40%. In this way, it is ensured that the infiltration performance of the electrolytic solution and the ion transmission channels inside the negative electrode active material layer are sufficient, and the volumetric energy density is maximally increased. The reasonable distribution of the porosities of the negative electrode active material layer of the electrochemical device ensures accelerated infiltration of the electrolytic solution while ensuring an appropriate volumetric energy density, and increases the ion transmission speed, thereby helping to improve the kinetic performance and rate performance of the electrochemical device, and further helping to increase the charging speed of the electrochemical device.

In some embodiments of this application, a surface porosity of the negative electrode active material layer, denoted as $X_{surface}$, satisfies 2% $\leq X_{surface} \leq$ 15%. The surface of the negative electrode active material layer is a surface exposed outside when the negative electrode is taken out of a disassembled electrochemical device, that is, a surface that is of the negative electrode active material layer and that faces away from the negative electrode current collector. In some embodiments, the surface porosity of the negative electrode active material layer directly affects the infiltration performance of the electrolytic solution and the ion diffusion performance. Therefore, an excessively low surface porosity of the negative electrode active material layer needs to be avoided, so as to avoid affecting the infiltration performance and the ion transmission speed. On the one hand, if the porosity of the negative electrode active material layer is excessively high, the volumetric energy density will be insufficient, and the bonding force between the particles in the surface of the negative electrode active material layer will be insufficient. Consequently, the particles of the negative electrode active material layer may fall off.

In this application, a compacted density of the negative electrode active material layer is 1.35 g/cm$^3$ to 1.70 g/cm$^3$. In some embodiments, the compacted density of the negative electrode active material layer is correlated to the porosity of the negative electrode active material layer. The higher the compacted density, the lower the porosity; and the lower the compacted density, the higher the porosity. Therefore, the compacted density needs to be controlled. An excessively low compacted density is detrimental to the volumetric energy density. An excessively high compacted density not only leads to an excessively low porosity, but may also lead to breakage of the particles in the negative electrode active material layer, and result in structural disruption of the negative electrode active material layer.

In some embodiments, a single-side thickness of the negative electrode active material layer is 40 to 120 $\mu$m. In some embodiments, the single-side thickness of the negative electrode active material layer means a thickness of the negative electrode active material layer on a single side of the negative electrode current collector. If the single-side thickness of the negative electrode active material layer is excessively small, storable energy may be insufficient, and the energy of the electrochemical device may decrease. If the single-side thickness of the negative electrode active material layer is excessively large, an excessively high bonding force may be required between the negative electrode active material layer and the negative electrode current collector, and a relatively large amount of binder may be required, thereby decreasing the conductivity of the negative electrode active material layer.

In some embodiments of this application, the negative electrode active material layer contains a negative electrode material, and there are defects in the surface of the negative electrode material. In some embodiments, the defects may include, for example, at least one of dot defects caused by heteroatoms brought into a crystal structure of the negative electrode material, cavity defects caused by the lack of some atoms, or defects caused by lattice dislocation. The defects in the surface of the negative electrode material can widen a contact surface between the negative electrode material and the electrolytic solution, thereby being conducive to the infiltration of the electrolytic solution. On the other hand, the defects in the surface of the negative electrode material can increase channels for intercalation or deintercalation of ions, thereby being conducive to transfer of the ions. The defects in the surface of the negative electrode material may be tested in a Raman test, for example.

In some embodiments of this application, the surface of the negative electrode material contains an amorphous carbon structure. In some embodiments, the negative electrode material may include, for example, a carbon material, or the surface of the negative electrode material may contain a carbon material. The amorphous carbon structure means a disordered structure that is partly formed of $sp^2$ structures and $sp^3$ structures. The amorphous carbon structure in the surface of the negative electrode material may be constructed in the following manner: coating the surface of the negative electrode material with at least one of asphalt, resin, or tar, and then performing heat treatment under specific conditions, for example, performing heat treatment at a temperature of 600 to 1200 °C, so as to construct an amorphous carbon structure.

In some embodiments of this application, the surface of the negative electrode material contains a C-X structure, where C is a carbon element, and X is at least one selected from an H, N, S, B, P, O, Cl, or F element. In some embodiments of this application, the negative electrode material may be a carbon material, such as graphite. The surface of the negative electrode material may undergo a photoelectron spectroscopy test to determine the C-X structure in the surface of the negative electrode material. The C-X structure is also a type of defect. When there is a specific amount of X element in the surface of the negative electrode material, interfacial tension between the electrolytic solution and the surface of the negative electrode material can be reduced, thereby being conducive to the infiltration of the electrolytic solution.

In some embodiments of this application, the particle size $D_{v50}$ of the negative electrode material satisfies: $12 \mu m \leq D_{v50} \leq 20 \mu m$. In some embodiments, when the particle size of the negative electrode material is excessively small, the consumption of the electrolytic solution will increase, and the cycle performance will be adversely affected. When the particle size of the negative electrode material is excessively large, the rate performance may be adversely affected.

In some embodiments, the specific surface area of the negative electrode material is 0.5 $m^2$/g to 7.0 $m^2$/g. In some embodiments, an excessively small specific surface area of the negative electrode material is detrimental to ion transmission, thereby being detrimental to increase of the charging and discharging speed. An excessively large specific surface area of the negative electrode material may increase the consumption of the electrolytic solution. In some embodiments, when the specific surface area of the negative electrode material falls within the above range, the deintercalation of ions (such as lithium ions) in the electrochemical device is facilitated.

In some embodiments, the compacted density of powder of the negative electrode material is greater than or equal to 1.85 $g/cm^3$. In some embodiments, when the compacted density of powder of the negative electrode material falls within the above range, it is more convenient to increase the energy density of the electrochemical device and ensure smooth deintercalation of the ions in the negative electrode material.

In some embodiments, when 1 $\mu$L of electrolytic solution prepared according to the formula provided in this application is dropped onto the surface of the negative electrode active material layer and keeps infiltrating for 5 seconds, a contact angle between an electrolyte droplet and the negative electrode active material layer is 0° to 90°. In some embodiments, if the contact angle between the electrolytic solution and the negative electrode active material layer falls within the above range, it indicates that the negative electrode active material layer is in good affinity with the electrolytic solution, and the electrolytic solution can well infiltrate the negative electrode active material layer.

In some embodiments, a result of a Raman test performed on particles in a 100 $\mu$m $\times$ 100 $\mu$m area of the negative electrode active material layer satisfies: $0.2 \leq I_d/I_g \leq 0.8$, where $I_d$ is a peak intensity of the particles of the negative electrode active material layer at 1350 $cm^{-1}$; and $I_g$ is a peak intensity of the particles of the negative electrode active material layer at 1580 $cm^{-1}$. In some embodiments, the negative electrode material includes a carbon material such as graphite. $I_d$ and $I_g$ are intensities of a D peak and a G peak, respectively, in the Raman test result of a carbon atom crystal, for example. The D peak reflects a defect of a carbon atom lattice. The G peak reflects in-plane stretching vibration of $sp^2$ hybridization of carbon atoms. $I_d/I_g$ reflects the concentration of defects. The lattice containing a specific amount of defects helps to increase the contact area and improve the infiltration effect. However, an excessively high concentration of defects may affect intrinsic properties of the negative electrode material.

In some embodiments, the negative electrode material includes primary particles and secondary particles. A ratio of the number of primary particles to the number of secondary particles is 1:9 to 5:5. In some embodiments, a secondary particle is formed of a plurality of primary particles. The particle size of the secondary particle is usually larger than that of a primary particle. The primary particles and the secondary particles are mixed so that the primary particles can be packed in gaps between the secondary particles. The mixing ratio between the two types of particles is controlled to facilitate ion diffusion and ensure a relatively high energy density. The average particle size of the primary particles is 5 to 10 μm. Controlling the particle size of the primary particles to fall within the above range can facilitate ion diffusion and ensure a relatively high energy density.

In some embodiments, the negative electrode active material layer further includes a binder. The binder includes at least one of: polyvinylidene difluoride, poly(vinylidene difluoride-co-hexafluoropropylene), polyamide, polyacrylonitrile, polyacrylate, polyacrylic acid, polyacrylic acid sodium salt, sodium carboxymethyl cellulose, polyvinylpyrrolidone, polyvinyl ether, polymethyl methacrylate, polytetrafluoroethylene, polyhexafluoropropylene, styrene butadiene rubber, acrylate, or epoxy resin.

In some embodiments, an electrolytic solution is further included. The electrolytic solution includes a solvent, a lithium salt, and an additive. The solvent includes carboxylate. The additive includes at least one of fluoroethylene carbonate, $LiBF_4$, or ethylene sulfate. The lithium salt includes $LiPF_6$.

In some embodiments, the positive electrode includes a positive electrode current collector and a positive electrode active material layer. The positive electrode active material layer includes a positive electrode material. The positive electrode material may include, for example, at least one of lithium titanium oxide, lithium cobalt oxide, lithium manganese oxide, or lithium nickel oxide.

In some embodiments, the positive electrode active material layer may further include a conductive agent and a binder in addition to the positive electrode material. The conductive agent may include at least one of carbon nanotubes, acetylene black, graphene, Ketjen black, or conductive carbon black. The binder may include at least one of polyvinylidene difluoride, carboxymethyl cellulose, or styrene butadiene rubber. In some embodiments, the positive electrode current collector may be an aluminum foil, or may be another positive electrode current collector commonly used in the art.

In some embodiments, the negative electrode active material layer includes a negative electrode material. The negative electrode material includes at least one of a silicon material or graphite. The silicon material includes at least one of silicon, a silicon-oxygen compound, a silicon-carbon compound, or silicon alloy. In some embodiments, the negative electrode current collector may include at least one of a copper foil, an aluminum foil, a nickel foil, or a carbon-based current collector. In some embodiments, the negative electrode active material layer may further include a conductive agent. In some embodiments, the conductive agent in the negative electrode active material layer includes at least one of conductive carbon black, acetylene black, carbon nanotubes, Ketjen black, conductive graphite, or graphene. In some embodiments, the mass percent of the conductive agent in the negative electrode active material layer is 0.5% to 10%.

In some embodiments, the separator includes at least one of polyethylene, polypropylene, polyvinylidene fluoride, polyethylene terephthalate, polyimide, or aramid fiber. For example, the polyethylene includes at least one of high-density polyethylene, low-density polyethylene, or ultra-high-molecular-weight polyethylene. Especially, the polyethylene and the polypropylene are highly effective in preventing short circuits, and improve stability of the battery through a turn-off effect. In some embodiments, the thickness of the separator is 5 to 500 μm.

In some embodiments of this application, the electrode assembly of the electrochemical device is a jelly-roll electrode assembly or a stacked electrode assembly.

In some embodiments, the electrochemical device includes, but is not limited to, a lithium-ion battery. In some embodiments, the lithium salt may further include one or more of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoroborate.

In some embodiments, the additives in the electrolytic solution further include: a carbonate compound, a carboxylate compound, an ether compound, another organic solvent, or any combination thereof. The carbonate compound may be selected from a chain carbonate compound, a cyclic carbonate compound, a fluorocarbonate compound, or any combination thereof. The chain carbonate compound may be selected from diethyl carbonate (DEC), dimethyl carbonate (DMC), dipropyl carbonate (DPC), methyl propyl carbonate (MPC), ethylene propyl carbonate (EPC), ethyl methyl carbonate (EMC), or any combination thereof. The cyclic carbonate compound may be selected from ethylene carbonate (EC), propylene carbonate (PC), butylene carbonate (BC), vinyl ethylene carbonate (VEC), or any combination thereof.

In some embodiments, the solvents in the electrolytic solution further include: methyl acetate, ethyl acetate, n-propyl acetate, tert-butyl acetate, methyl propionate, propyl propionate, γ-butyrolactone, decanolactone, valerolactone, mevalonolactone, caprolactone, methyl formate, or any combination thereof.

In some embodiments of this application, using a lithium-ion battery as an example, the lithium-ion battery is prepared by: winding or stacking the positive electrode plate, the separator, and the negative electrode plate sequentially into an electrode assembly, loading the electrode assembly into, for example, an aluminum laminated film for packaging, injecting an electrolytic solution, and performing formation and packaging; Then a performance test is performed on the prepared lithium-ion battery.

An embodiment of this application further provides an electronic device containing the electrochemical device. The electronic device used in the embodiment of this application is not particularly limited, and may be any electronic device known in the prior art. In some embodiments, the electronic device may include, but is not limited to, a notebook computer, a pen-inputting computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a bicycle, a lighting appliance, a toy, a game console, a watch, a power tool, a flashlight, a camera, a large household battery, a lithium-ion capacitor, and the like.

Some specific embodiments are enumerated below to give a clearer description of this application, using a lithium-ion battery as an example.

Preparing a positive electrode: Mixing lithium cobalt oxide (molecular formula: $LiCoO_2$), acetylene black, and polyvinylidene difluoride (PVDF for short) at a weight ratio of 96: 2: 2 in an appropriate amount of N-methylpyrrolidone (NMP for short) solvent, and stirring thoroughly to form a homogeneous positive electrode slurry; coating an aluminum foil with the positive electrode slurry, and performing drying, cold pressing, cutting, and tab welding to obtain a positive electrode.

Preparing a negative electrode: Mixing styrene butadiene rubber (SBR for short) and sodium carboxymethyl cellulose (CMC for short) in a deionized water solvent at a weight ratio of 95: 2: 3, and stirring thoroughly to form a homogeneous negative electrode slurry; coating the negative electrode slurry onto a negative electrode current collector copper foil that is pre-coated with a 1.5 $\mu$m-thick undercoat layer (carbon black), performing cold pressing on the coated negative electrode with different calendering pressures, and performing cutting and welding.

In determining the percentage of primary particles and the percentage of secondary particles in the negative electrode material, the particles may be counted by using scanning electron microscopy (SEM). The particles in the range of 1000 $\mu$m $\times$ 1000 $\mu$m are obtained by using SEM, and primary particles and secondary particles are marked. A particle that is formed by agglomerating two or more particles is defined as a secondary particle, and all others are primary particles. In this way, the percentage of primary particles and the percentage of secondary particles are determined. The average particle size of the primary particles is determined based on the particle size of the particles counted and marked by the SEM. In order to obtain enough samples for counting, the particle sizes of particles in 30 images are counted. The average particle size of the primary particles in each image is calculated, and then the average particle size of the 30 images is calculated as the average particle size of the primary particles. $D_{v50}$ of the negative electrode active material may be measured by a particle size analyzer. The particle size test method is obtained by referring to GB/T 19077-2016. A specific process is: Weighing out 1 gram of the material as a sample, and mixing the sample with 20 mL of deionized water and a tiny amount of dispersant evenly, putting the mixture in an ultrasonication device, performing ultrasonication for 5 minutes, and then pouring the solution into a Hydro 2000SM feeding system for testing, where the test instrument is Mastersizer 3000 manufactured by Malvern. In the test process, when a laser beam passes through the dispersed particle sample, the particle size measurement is performed by measuring the intensity of scattered light. Then the data is used for analysis and calculation to form the particle size distribution of the scattering spectrogram.

Preparing a separator: Using 7 $\mu$m-thick polyethylene porous polymer film as a separator.

Preparing an electrolytic solution: Adding $LiPF_6$ into a solvent in a dry argon atmosphere, where the solvent is a mixture of ethylene carbonate (EC), propylene carbonate (PC), and diethyl carbonate (DEC) at a weight ratio of 1: 1: 1, and mixing the solution evenly, where the concentration of $LiPF_6$ is 1.15 mol/L; and then adding fluoroethylene carbonate and adiponitrile, and mixing the solution evenly to obtain an electrolytic solution. Based on the total weight of the electrolytic solution, the weight percent of the fluoroethylene carbonate is 3%, and the weight percent of the adiponitrile is 2%. The electrolytic solution involved in the following tests adopts this electrolytic solution formula.

Preparing a lithium-ion battery: Stacking the positive electrode, the separator, the negative electrode in sequence so that the separator is located between the positive electrode and the negative electrode to serve an isolation function, and then winding them to obtain a bare cell; welding tabs, and then putting the bare cell into an outer package foil made of an aluminum plastic film; injecting the prepared electrolytic solution into the bare cell that is dried, and performing steps such as vacuum sealing, static standing, chemical formation, shaping, and capacity testing to obtain a pouchtype lithium-ion battery.

Terms and definitions: Primary particles of the negative electrode active material are a sample of the negative electrode active material obtained by directly graphitizing particles of a specific particle size distribution, where the particles are obtained by pulverizing the negative electrode active material. Secondary particles of the negative electrode active material are a product of graphitizing particles of the pulverized negative electrode active material, where the particles are bonded together by asphalt after the pulverized material is mixed with the asphalt at a specific ratio and undergoes heat treatment in a granulation device at a specific temperature. The content of primary particles in the negative electrode active material is determined by controlling the mixing ratio between the primary particles and the secondary particles.

The performance parameter test methods in the embodiments and comparative embodiments are as follows.

1) Method for testing the cross-section porosity:

Process of preparing an ion beam cross-section polishing (CP) sample of the negative electrode: Cutting the negative electrode active material layer into a size of 0.5 cm $\times$ 1 cm, sticking the cut-out negative electrode active material layer onto a 1 cm $\times$ 1.5 cm sized silicon wafer carrier by using a conductive adhesive, and then processing one end of the negative electrode plate by performing argon ion beam cross-section polishing (the accelerating voltage is 8 KV, and each sample is processed for 4 hours). The argon ion beam cross-section polishing is a process in which the argon gas is ionized into an ionic state by using a high-voltage electrical field, whereupon the generated argon ions bombard the surface of the negative electrode plate at a high speed under the action of the accelerating voltage, so that the negative electrode plate is denuded layer by layer to achieve the effect of polishing.

After being prepared, the CP sample of the active material layer is analyzed by using a scanning electron microscope (SEM). The scanning electron microscope used in this application is a JSM-6360LV model manufactured by JEOL, and is used to analyze the morphology of the sample.

Testing the cross-section porosity at different thicknesses of the active material layer: Selecting a test area of 1000 $\mu$m $\times$ A $\mu$m, counting all the voids between the particles at a thickness of A in the cross section, where A is 10 $\mu$m, 0 to 10 $\mu$m, 10 to 20 $\mu$m, and greater than 20 $\mu$m, respectively, distinguishing the particles from the pores based on the light and shade in the image, where lightness indicates particles and shades indicate pores (as shown in FIG. 2); then processing the image by using Image J software, adjusting the background of the particles to a black background, adjusting the background of the pores to a white background, and determining a percentage of area of the pores in the entire image to obtain a cross-section porosity (as shown in FIG. 3). The surface porosity is determined in the same way. FIG. 1 is a schematic diagram.

2) Method for testing the surface porosity of the active material layer:

Selecting a test area of 1000 $\mu$m $\times$ 100 $\mu$m on the surface of the active material layer. The surface of the active material layer is a surface that faces away from the negative electrode current collector. Counting all the voids between the particles in the test area, distinguishing the particles from the pores based on the light and shade in the image, where lightness indicates particles and shades indicate pores; then processing the image by using Image J software, and adjusting the background of the particles to a black background, adjusting the background of the pores to a white background, and determining a percentage of area of the pores in the entire image to obtain a surface porosity.

3) Method for testing the contact angle

Dropping 1 $\mu$L of electrolytic solution (the electrolytic solution is prepared based on the foregoing electrolytic solution formula) onto the surface of the active material layer under a specific temperature (usually a room temperature), and then performing optical imaging by using a charge coupled device (CCD), and then fitting the obtained image to obtain a contact angle of the electrolytic solution on the surface of the active material layer. The contact angle represents the infiltration effect of a liquid on a specific surface. The electrolytic solution is prepared based on the foregoing electrolytic solution formula.

4) Method for testing the porosity of the negative electrode active material layer

Making a complete wafer of the negative electrode active material layer as a sample. For each embodiment or comparative embodiment, testing 30 samples. The volume of each sample is approximately 0.35 cm$^3$. Testing the porosity of the negative electrode active material layer based on the standard of *Iron ores-Determination of Apparent Density, True Density And Porosity, GB/T24586-2009*, where the test gas is helium.

5) Method for testing the infiltration time of the negative electrode active material layer

Taking a slice 50 mm in length and 50 mm in width out of the negative electrode active material layer as a sample. Under dry conditions, dropping 5 mL of electrolytic solution onto the surface of the sample, and starting timing. Stopping timing upon disappearance of all electrolytic solution on the surface the sample. The timing duration is the infiltration time the negative electrode active material layer. Testing 30 samples for each embodiment or comparative embodiment, and averaging out the values. The electrolytic solution is prepared based on the foregoing electrolytic solution formula.

6) Method for testing the specific surface area

The specific surface area is tested by referring to GB/T 19587-2017. A specific test process is: Weighing out 1 to 8 grams of the to-be-tested material as a sample (the volume of the sample weighed out exceeds 1/3 of the volume of the sphere), and putting the sample into a 1/2-inch long tube with a bulb (the calibre of the spherical part is 12 mm); pre-treating the sample at 200 °C for 2 hours, and then putting the sample into a TriStar3030 (Micromeritics, USA) analyzer for testing, measuring the specific surface area at a liquid nitrogen temperature of 77 degrees Kelvin by using $N_2$ (purity: 99.999%) as an adsorption gas, and calculating the specific surface area by a Brunauer-Emmett-Teller (BET) method.

7) Method for testing the compacted density of powder

The compacted density of powder is tested with reference to the standard of GB/T 24533-2009 *Graphite Negative Electrode Materials for Lithium-ion Batteries.* A specific test method is: Weighing out $1.0000 \pm 0.0500$ gram of the negative electrode material as a sample, putting the sample into a CARVER#3619 (13 mm) test mold and then into a SUNSTEST UTM7305 instrument, and exerting a pressure of 0.3 to 5.0 tons for testing. The compacted density of powder referred to herein is a compacted density measured after being pressed under a pressure of 5 tons. Calculation formula of the compacted density is: compacted density = mass of the negative electrode material/area of thrust surface of the negative electrode material/thickness of the sample.

8) Testing the degree of surface defect by using a Raman spectrometer

Selecting a 100 $\mu$m $\times$ 100 $\mu$m sized slice of the negative electrode active material layer, scanning the particles in the selected area of the negative electrode active material layer by using a laser microscope confocal Raman spectrometer (Raman, HR Evolution, HORIBA Scientific Instrument Division), obtaining the D peak and the G peak of all particles in the selected area, processing the data by using LabSpec software to obtain the intensities of the D peak and G peak of each particle, denoted as $I_D$ and $I_G$ respectively. The laser wavelength of the Raman spectrometer may fall within a range of 532 nm to 785 nm. The value of $I_D/I_G$ herein is an average value of the ratio of $I_D$ to $I_G$ of all particles measured in such a range. D peak: generally located near $1350 \pm 50$ cm1, caused by a radial breathing mode of symmetric stretching vibration of $sp^2$ carbon atoms in an aromatic ring (structural defect); G peak: located near $1580 \pm 50$ cm$^{-1}$, caused by the stretching vibration between $sp^2$ carbon atoms, and corresponding to the vibration of E2g optical phonons at the center of the Brillouin zone (in-plane vibration of carbon atoms).

9) Method for testing lithium-ion liquid phase transfer resistance ($R_{ion}$)

Connecting a lithium-ion battery connected to a Bio-Logic VMP3B electrochemical workstation manufactured by Bio-Logic, France, and performing the test at frequencies of 30 to 50 kHz in an amplitude of 5 mV. After data is collected, the data is analyzed by using an impedance complex plane plot to obtain a lithium-ion liquid phase transfer resistance ($R_{ion}$).

10) Method for testing the capacity retention rate of the lithium-ion battery discharged at 5 C

Leaving the lithium-ion battery to stand for 5 minutes under 25 °C, and then charging the battery at a constant current of 0.7 C until the voltage reaches 4.45 V, charging the battery at a constant voltage of 4.45 V until the current reaches 0.05 C, leaving the battery to stand for 5 minutes, then discharging the battery at a constant current of 0.5 C until a voltage of 3.0 V, and leaving the battery to stand for 5 minutes. Repeating the foregoing charging and discharging process, discharging the battery at a current of 0.1 C, recording the 0.1 C discharge capacity of the lithium-ion battery, and then discharging the battery at a current of 5 C, and recording the 5 C discharge capacity of the lithium-ion battery. Calculating the capacity retention rate of the lithium-ion battery discharged at 5 C based on the following formula:

$$\text{Capacity retention rate of the battery discharged at 5 C} = \text{(capacity of the}$$

$$\text{battery discharged at 5 C/capacity of the battery discharged at 0.1 C)} \times 100\%$$

11) Method for testing the direct-current resistance (DCR) of the lithium-ion battery

Charging the lithium-ion battery at a constant current of 1.5 C at a temperature of 25 °C until the voltage reaches 4.45 V, then charging the battery at a constant voltage of 4.45 V until the current reaches 0.05 C, and then leaving the battery to stand for 30 minutes. Discharging the battery at a current of 0.1 C for 10 seconds, recording the voltage value as U1, discharging the battery at a current of 1 C for 360 seconds, and recording the voltage value as U2. Repeating the charging and discharging process for 5 cycles. "1 C" is a current value at which the lithium-ion battery can be fully discharged within 1 hour.

Calculating the direct-current resistance R of the lithium-ion battery under 25 °C by using the following formula:

$$R = (U2 - U1)/(1\ C - 0.1\ C).$$

Testing the direct-current resistance of the lithium-ion battery under 0 °C by using basically the same method except that the operating temperature is 0 °C.

Unless otherwise specified, DCR referred to herein is a direct-current resistance of the lithium-ion battery in a 10% state of charge (SOC).

12) Electrochemical impedance spectroscopy (EIS)

a) Preparation of a three-electrode battery and lithium plating: The preparation method is the same as the foregoing preparation method of a lithium-ion battery. In preparing a lithium-ion battery, a copper wire is connected to the battery as a reference electrode. The contact position of the copper wire is in a blank region of the negative electrode current collector and is close to but not in contact with a tab position, where the blank region is coated with no active material layer. Then battery is plated with lithium at a current of 20 μA for 6 hours in the region of contact between the copper wire and the negative electrode current collector. The EIS is tested after the lithium plating is completed.

b) Steps of testing the EIS: Connecting the lithium-plated three-electrode battery to a Bio-Logic VMP3B electrochemical workstation manufactured by Bio-Logic, France, and performing the test at frequencies of 30 to 50 kHz in an amplitude of 5 mV. After data is collected, the data is analyzed by using an impedance complex plane plot to obtain data of $R_{ct}$.

13) Method for testing lithium plating status of the negative electrode

Leaving a to-be-tested lithium-ion battery to stand for 5 minutes under a temperature of 0 °C, charging the battery at a constant current of 0.8 C until the voltage reaches 4.45 V, charging the battery at a constant voltage of 4.45 V until the current reaches 0.05 C, leaving the battery to stand for 5 minutes, then discharging the battery at a constant current of 0.5 C until a voltage of 3.0 V, and leaving the battery to stand for 5 minutes. Repeating the foregoing charging and discharging process for 10 cycles, and then fully charging the battery, disassembling the battery in a dry room, and taking photos to record the status of the negative electrode.

Determining the degree of lithium plating: The degree of lithium plating is determined based on the status of the negative electrode obtained by disassembling a fully charged battery. When the negative electrode is golden yellow on the whole and the gray area of the negative electrode is less than 2%, it is determined that no lithium plating occurs. When a majority of the negative electrode is golden yellow, but some positions of the negative electrode are observed as gray, and the gray area accounts for 2% to 20%, it is determined that slight lithium plating occurs. When the negative electrode are partly gray, but a golden yellow part can still be observed, and the gray area accounts for 20% to 60%, it is determined that lithium plating occurs. When a majority of the negative electrode is gray, and the gray area accounts for more than 60%, it is determined that severe lithium plating occurs.

14) Method for testing the cycle expansion rate of the lithium-ion battery

Leaving the lithium-ion battery to stand for 5 minutes under 25 °C, and then charging the battery at a constant current of 0.7 C until the voltage reaches 4.45 V, and then charging the battery at a constant voltage of 4.45 V until the current reaches 0.05 C, and leaving the battery to stand for 5 minutes. Measuring the thicknesses of the lithium-ion battery at three positions by using a MMC test method, and denoting an average value of the thicknesses as $MMC_0$. Then discharging the lithium-ion battery at a constant current of 0.5 C until the voltage reaches 3.0 V, and leaving the battery to stand for 5 minutes. Repeating the foregoing charging and discharging process for 500 cycles, measuring the thicknesses of the lithium-ion battery at three positions in each cycle, and denoting the average value of the thicknesses as $MMC_x$ (x represents the number of cycles).

Calculating the cycle expansion rate of the lithium-ion battery under 45 °C based on the following formula:

$$\text{Cycle expansion rate } (45\ ^\circ\text{C}) = (MMC_x - MMC_0)/MMC_0 \times 100\%.$$

The MMC test method is: Measuring the thickness of the lithium-ion battery at the position of a positive electrode tab by using a micrometer tester (manufactured by Mitutoyo, Japan; model: MDC-25SX), performing the measurement at three different positions for each sample, and recording an average value of the thicknesses as an MMC thickness.

The parameters in the embodiments and comparative embodiments differ in a cross-section porosity. The specific difference and test results are shown in the following table. In Embodiments 1 to 18 and Comparative Embodiment 1, negative electrodes with different porosity distributions in the cross-section layer are obtained by adjusting the calendering pressure exerted on the electrode plate. The calendering pressure is obtained by adjusting an inter-roller gap through which the electrode plate passes. The calendering pressure ranges from 2 tons to 12 tons. Embodiments 1 to 3, Embodiments 4 to 8, Embodiments 9 to 12, Embodiments 13 to 16, and Embodiments 17 to 18 are obtained by adjusting the thickness of the negative electrode active material. The thickness of the negative electrode active material layer on a single side of the negative electrode current collector is 40 to 80 $\mu$m. The thicknesses of the single-side negative electrode active material layer in Embodiments 1 to 3 are 40 $\mu$m, 60 $\mu$m, and 80 $\mu$m, respectively. The thicknesses of the single-side negative electrode active material layer in Embodiments 4 to 8 are 40 $\mu$m, 70 $\mu$m, 80 $\mu$m, 50 $\mu$m, and 60 $\mu$m, respectively. The thicknesses of the single-side negative electrode active material layer in Embodiments 9 to 12 are 40 $\mu$m, 50 $\mu$m, 60 $\mu$m, and 80 $\mu$m, respectively. The thicknesses of the single-side negative electrode active material layer in Embodiments 13 to 16 are 40 $\mu$m, 50 $\mu$m, 60 $\mu$m, and 80 $\mu$m, respectively. The thickness of the single-side negative electrode active material layer in Embodiment 17 is 80 $\mu$m. The thickness of the single-side negative electrode active material layer in Embodiment 18 is 80 $\mu$m. The thicknesses of the single-side negative electrode active material layer in Comparative Embodiment 1 and Comparative Embodiment 2 are both 60 $\mu$m.

**Table 1**

| Serial number | Calendering pressure | $X_{10}$ | $X_{10-20}$ | $X_{>20}$ | Lithium plating | $R_{ct}$ | 5mL of electrolytic solution complete infiltration time |
|---|---|---|---|---|---|---|---|
| | T | % | % | % | 0°C | m$\Omega$, 0 °C | s |
| Embodiment 1 | 12 | 5.0% | 10.0% | 15.0% | Slight lithium plating | 43.15 | 45 |
| Embodiment 2 | 12 | 5.0% | 15.0% | 20.0% | Slight lithium plating | 42.16 | 44 |
| Embodiment 3 | 12 | 5.0% | 20.0% | 30.0% | No lithium plating | 41.54 | 38 |
| Embodiment 4 | 9 | 10.0% | 15.0% | 20.0% | Slight lithium plating | 38.62 | 37 |
| Embodiment 5 | 9 | 10.0% | 20.0% | 45.0% | No lithium plating | 49.68 | 27 |
| Embodiment 6 | 9 | 10.0% | 35.0% | 45.0% | No lithium plating | 48.46 | 22 |

(continued)

| Serial number | Calendering pressure | $X_{10}$ | $X_{10-20}$ | $X_{>20}$ | Lithium plating | $R_{ct}$ | 5mL of electrolytic solution complete infiltration time |
|---|---|---|---|---|---|---|---|
| | T | % | % | % | 0°C | mΩ, 0 °C | s |
| Embodiment 7 | 9 | 10.0% | 22.0% | 31.0% | No lithium plating | 36.06 | 26 |
| Embodiment 8 | 9 | 10.0% | 20.0% | 40.0% | No lithium plating | 35.62 | 25 |
| Embodiment 9 | 6 | 15.0% | 20.0% | 25.0% | No lithium plating | 33.63 | 23 |
| Embodiment 10 | 6 | 15.0% | 25.0% | 30.0% | No lithium plating | 33.39 | 20 |
| Embodiment 11 | 6 | 15.0% | 30.0% | 35.0% | No lithium plating | 32.66 | 17 |
| Embodiment 12 | 6 | 15.0% | 20.0% | 40.0% | No lithium plating | 31.23 | 15 |
| Embodiment 13 | 3 | 20.0% | 25.0% | 30.0% | No lithium plating | 36.53 | 13 |
| Embodiment 14 | 3 | 20.0% | 30.0% | 35.0% | No lithium plating | 26.29 | 12 |
| Embodiment 15 | 3 | 20.0% | 25.0% | 40.0% | No lithium plating | 25.97 | 11 |
| Embodiment 16 | 3 | 20.0% | 30.0% | 40.0% | No lithium plating | 25.50 | 10 |
| Embodiment 17 | 2 | 20.0% | 30.0% | 40.0% | No lithium plating | 20.69 | 8 |
| Embodiment 18 | 9 | 10.0% | 35.0% | 40.0% | No lithium plating | 47.69 | 25 |
| Comparative Embodiment 1 | 15 | 3.0% | 15.0% | 25.0% | Severe lithium plating | 78.90 | 100 |
| Comparative Embodiment 2 | 1 | 40.0% | 45.0% | 55.0% | Slight lithium plating | 58.90 | 5 |

Referring to Table 1, Table 1 shows relationships between the lithium plating status, charge transfer resistance ($R_{ct}$), and electrode plate infiltration performance of the lithium-ion battery with different cross-section porosities at different depths of the negative electrode.

As can be seen from Table 1, in all the embodiments, the lithium plating status is better than that of Comparative Embodiment 1, and the charge transfer resistance and the electrolyte infiltration time are less than those of Comparative Embodiment 1. That is because in the embodiments, the cross-section porosity $X_{10}$ in a region from the negative electrode active material layer to a depth of 10 $\mu$m in a direction perpendicular to the negative electrode current collector satisfies $5\% \leq X_{10} \leq 25\%$. In this case, the electrolytic solution can well infiltrate the negative electrode active material layer, and a sufficient number of charge transfer channels are available, thereby helping to improve the infiltration performance of the electrolytic solution, reduce the charge transfer resistance, and slow down lithium plating.

As shown in Embodiments 1 to 3, Embodiments 9 to 12, and Embodiments 13 to 18, as the cross-section porosity increases at different positions, the lithium plating of the lithium-ion battery is mitigated, the charge transfer resistance is reduced, and the effect of the electrolytic solution infiltrating the surface of the electrode plate is improved.

A possible reason is that the increased cross-section porosity helps to increase the infiltration area of the electrolytic solution and the transmission space of lithium ions. The variation of the porosity $X_{10}$ exerts the most significant effect on the charge transfer resistance. With the increase of $X_{10}$, the charge transfer resistance ($R_{ct}$) decreases significantly. That is because the position corresponding to $X_{10}$ is close to a superficial layer. After the superficial porosity increases, the electrolytic solution can penetrate and infiltrate the interior of the negative electrode active material layer more easily to improve the kinetic performance. In Embodiments 4 to 8, the porosity $X_{10}$ is the same. In contrast to Embodiment 8, $X_{>20}$ in Embodiment 5 further increases, and therefore, the infiltration performance of the electrolytic solution is improved, and the increase in porosity is more conducive to the transfer of the electrolytic solution, but $R_{ct}$ increases instead. That is because when the porosity is excessively high, the connectivity between particles is lower, and the electron conductivity is lower, so that the charge transfer resistance increases instead. In contrast to Embodiment 5, $X_{10-20}$ in Embodiment 6 increases, with the result that electrolytic solution is also more transmissive, and $R_{ct}$ is the same as that of Embodiment 5. An excessively high porosity impairs the performance instead. In Comparative Embodiment 1 versus Embodiment 1, $X_{10}$ in Comparative Embodiment 1 is lower than $X_{10}$ in Embodiment 1. Consequently, severe lithium plating occurs in Comparative Embodiment 1, and $R_{ct}$ and the time required for fully infiltrating the electrode plate are significantly greater than those of Embodiment 1. That is because, when $X_{10}$ in Comparative Embodiment 1 is excessively low, the electrolytic solution is unable to smoothly enter the interior of the negative electrode active material layer, and the transfer of lithium ions is hindered. Therefore, the porosity $X_{10}$ needs to be controlled to be within a specific range. The porosity $X_{10}$ in Comparative Embodiment 2 is 40%, which is much higher than the specified value. Although the increased porosity helps the electrolytic solution infiltrate, the impedance is aggravated because the contact between particles becomes poor. Consequently, $R_{ct}$ increases instead in contrast to Embodiments 1 to 18. Therefore, in practical applications, the porosity needs to be controlled to be within a specific range, thereby helping the electrolytic solution infiltrate and improving the contact between particles. As can be seen from comparison between Embodiment 5, Embodiment 6, and Embodiment 18, when the condition of $5\% \leq X_{10} \leq 25\%$ is satisfied but conditions of $10\% \leq X_{10\text{-}20} \leq 30\%$ and $15\% \leq X_{>20} \leq 40\%$ are not satisfied, the value of $R_{ct}$ is high, thereby affecting battery performance. Therefore, preferably, the condition of $5\% \leq X_{10} \leq 25\%$ is satisfied; and more preferably, the conditions of $10\% \leq X_{10-20} \leq 30\%$ and $15\% \leq X_{>20} \leq 40\%$ are then satisfied, so that the battery performance is higher.

Table 2 shows the correlations between the cross-section porosities of the negative electrode active material layer at different depths, the superficial porosity of the negative electrode active material layer, the infiltration effect of the electrolytic solution, and the electrical performance of the battery when the compacted density of the negative electrode active material layer varies.

**Table 2**

| Serial number | Compacted density of negative electrode active material layer | $X_{10}$ | $X_{10-20}$ | $X_{>20}$ | Surface porosity of negative electrode active material layer | First-cycle Coulombic efficiency of battery | DCR |
|---|---|---|---|---|---|---|---|
| | g/cm$^3$ | % | % | % | % | % | 0 °C (mΩ) |
| Embodiment 19 | 1.35 | 25% | 30% | 40% | 15% | 93.4% | 192.2 |
| Embodiment 20 | 1.40 | 23% | 28% | 38% | 14% | 93.0% | 213.5 |
| Embodiment 21 | 1.45 | 20% | 25% | 35% | 13% | 92.8% | 216.8 |
| Embodiment 22 | 1.50 | 18% | 23% | 32% | 11% | 92.2% | 218.3 |
| Embodiment 23 | 1.55 | 15% | 20% | 28% | 9% | 92.7% | 220.5 |
| Embodiment 24 | 1.60 | 12% | 16% | 24% | 7% | 92.4% | 220.6 |
| Embodiment 25 | 1.65 | 9% | 13% | 19% | 4% | 92.2% | 220.7 |

(continued)

| Serial number | Compacted density of negative electrode active material layer | $X_{10}$ | $X_{10\text{-}20}$ | $X_{>20}$ | Surface porosity of negative electrode active material layer | First-cycle Coulombic efficiency of battery | DCR |
|---|---|---|---|---|---|---|---|
| | g/cm$^3$ | % | % | % | % | % | 0 °C (mΩ) |
| Embodiment 26 | 1.70 | 5% | 10% | 15% | 2% | 92.9% | 221.2 |
| Comparative Embodiment 3 | 1.25 | 28% | 35% | 50% | 20% | 92.6% | 240.4 |
| Comparative Embodiment 4 | 1.80 | 2% | 8% | 14% | 1% | 90.5% | 257.9 |

In Table 2, the thickness of the single-side negative electrode active material layer of the negative electrode current collector in Embodiments 19 to 26 and Comparative Embodiments 3 and 4 is 60 μm. By adjusting the calendering pressure (2 to 12 tons), the compacted density of the negative electrode active material layer is controlled, and therefore, the porosity of the negative electrode active material layer at different positions is controlled.

As shown in Table 2, in Embodiments 19 to 21, with the increase of the compacted density of the negative electrode active material layer, the cross-section porosity of the negative electrode active material layer at different depths decreases, the superficial porosity of the negative electrode active material layer decreases, and the first-cycle Coulombic efficiency of the lithium-ion battery decreases, and the direct-current resistance increases. That may be because, with the increase of the compacted density of the negative electrode active material layer, the pressure exerted on the surface of the negative electrode active material layer during calendering increases. The surface particles bear a greater force than interior particles because the surface particles are in direct contact with the calendering machines. The porosity between the surface particles is lower than the porosity between the interior particles. When the electrolytic solution contacts the negative electrode active material layer, the surface of the negative electrode active material layer is contacted first. If the surface porosity of the negative electrode active material layer is excessively low, the infiltration effect of the electrolytic solution will be affected, and the transmission channels of lithium ions will be reduced. Therefore, an appropriate porosity needs to be maintained in the surface of the negative electrode active material layer, so as to be very conducive to improving the infiltration effect of the electrolytic solution and ensuring smooth deintercalation of lithium ions.

The compacted density of the surface of the negative electrode active material layer in Comparative Embodiment 3 is relatively low. Therefore, a higher cross-section porosity and a higher surface porosity are exhibited in Comparative Embodiment 3. However, when the porosity in Comparative Embodiment 3 is excessively high, the contact between particles becomes poor, thereby aggravating the direct-current resistance instead and being detrimental to high-current charging and discharging.

The compacted density of the negative electrode active material layer in Comparative Embodiment 4 is excessively high, with the result that the porosity in Comparative Embodiment 4 is excessively low. Consequently, the infiltration effect of the electrolytic solution is inferior, and the lithium ions lack a transmission channel, with the result that the direct-current resistance increases and that the first-cycle Coulombic efficiency of the battery decreases.

Table 3 shows how the negative electrode material affects the electrical performance.

**Table 3**

| Serial number | $I_d/I_g$ | Content of N | Content of F | Contact angle | 5mL of electrolytic solution complete infiltration time | Capacity retention rate of battery discharged at 5 C | Liquid phase transfer resistance ($R_{ion}$, 25 °C) | DCR 0 °C 10% SOC |
|---|---|---|---|---|---|---|---|---|
| | / | wt% | wt% | ° | s | % | mΩ | mOhm |
| Embodiment 15 | 0.55 | 0.40 | 0.04 | 10 | 11 | 94.8% | 2.7 | 192.2 |
| Embodiment 27 | 0.28 | 0.10 | 0 | 90 | 32 | 93.1% | 11.0 | 229.1 |
| Embodiment 28 | 0.45 | 0.40 | 0 | 70 | 30 | 93.1% | 8.4 | 225.7 |
| Embodiment 29 | 0.70 | 0.80 | 0 | 50 | 22 | 93.8% | 7.0 | 220.5 |
| Embodiment 30 | 0.80 | 1.00 | 0 | 40 | 13 | 94.3% | 6.5 | 218.3 |
| Embodiment 31 | 0.20 | 0 | 0.04 | 60 | 29 | 93.7% | 7.9 | 223.6 |
| Embodiment 32 | 0.25 | 0 | 0.08 | 30 | 12 | 94.7% | 3.8 | 210.8 |
| Embodiment 33 | 0.30 | 0 | 0.10 | 0 | 10 | 95.4% | 2.4 | 181.2 |
| Embodiment 34 | 0.32 | 0.20 | 0.05 | 40 | 15 | 94.1% | 3.9 | 213.5 |
| Comparative Embodiment 5 | 1.02 | 2.00 | 0.02 | 45 | 5 | 90.8% | 2.3 | 240.4 |
| Comparative Embodiment 6 | 0.10 | 0.00 | 0 | 110 | 100 | 80.5% | 20.5 | 257.9 |

In Embodiment 15, Embodiments 27 to 34, and Comparative Embodiments 5 to 6, the compacted density of the negative electrode active material layer is the same, the weight of coating of the negative electrode active material per unit area and the thickness of coating on the negative electrode current collector are the same. In the embodiments and the comparative embodiments, F and N elements enter the surface of the negative electrode material by doping the surface of the negative electrode material with fluorinated graphene (the weight percent of F in the fluorinated graphene is 50%) and nitrogen-containing compounds such as urea, melamine, and phenol resin, where the content of fluorine and nitrogen is based on the content of the entire negative electrode active material.

As shown in Embodiments 15 and Embodiments 27 to 34, as the content of N and F increases or as the defects increase in the surface of the negative electrode material, the contact angle formed between the electrolytic solution and the surface of the negative electrode active material layer decreases, and the infiltration time decreases. That is because the electrolytic solution is well compatible with N and F. Therefore, by doping the surface of the negative electrode material with a specific amount of N or F elements, the surface tension between the electrolytic solution and the negative electrode surface is reduced. In addition, the F and N elements help create defects or voids in the surface of the negative electrode material. Under a specific compacted density, the defects and voids facilitate interfacial contact between the electrolytic solution and the negative electrode active material layer.

However, excessive content of the doping elements is not beneficial. As shown in the table, the DCR first decreases and then increases with the increase of the doping amount of heteroatoms. That is because the atomic radius of the doping elements N and F is smaller than that of C, and the electronegativity of the doping elements is higher than that of the carbon atom. The doping elements can change the crystal structure, improve the electrochemical performance of the superficial structure of the negative electrode material, provide more active sites, and facilitate the diffusion of lithium ions. However, an excessive content of the doping elements is detrimental to transmission of lithium ions due to excessive stability of the structure formed by lithium ions and heteroatoms, and increases the DCR. As shown in Comparative Embodiment 5, the excessive content of N results in an excessively high DCR.

In Comparative Embodiment 6, a specific amount of doping elements is lacking in the surface. Therefore, the contact angle between the electrolytic solution and the negative electrode active material layer is relatively large, the infiltration effect of the electrolytic solution is inferior, the direct-current resistance is high, and the rate performance is low.

Table 4 shows how the battery performance is affected by the specific surface area (BET) of the negative electrode material, the particle mixing ratio of the negative electrode material, the compacted density of powder of the negative electrode material, the particle size of the negative electrode material, and the C004/C110 ratio of the negative electrode material.

**Table 4**

| Serial number | Specific surface area | Mixing ratio between primary particles and secondary particles | Compacted density of powder | $D_{v50}$ | $C_{004}/C_{110}$ | Expansion rate of battery after 500 cycles under 45 °C | Capacity retention rate of battery discharged at 5 C |
|---|---|---|---|---|---|---|---|
| | m²/g | / | g/cm³ | μm | / | % | % |
| Embodiment 7 | 2 | 5:5 | 1.92 | 12 | 5 | 8.2% | 92.8% |
| Embodiment 35 | 3 | 6:4 | 1.90 | 13 | 4.6 | 8.2% | 93.1% |
| Embodiment 36 | 4 | 4:6 | 1.94 | 15 | 3.8 | 7.9% | 93.4% |
| Embodiment 37 | 5 | 2:8 | 1.96 | 16 | 2.5 | 7.6% | 94.2% |
| Embodiment 38 | 6 | 1:9 | 2.00 | 18 | 2 | 7.2% | 95.8% |
| Embodiment 39 | 7 | 5:5 | 1.93 | 20 | 3.5 | 8.1% | 94.3% |

In Embodiment 7 and Embodiments 35 to 39 in Table 4, the compacted density of the negative electrode active material layer is the same, and the weight of coating of the negative electrode active material per unit area and the thickness of coating on the negative electrode current collector are the same.

Table 4 shows how the specific surface area (BET) of the negative electrode material, the particle size change, the mixing ratio between primary particles and secondary particles, the compacted density of powder of the negative electrode material, and the particle size $D_{v50}$ of the negative electrode material affect the cycle expansion rate of the battery under 45 °C and the capacity retention rate of the battery discharged at 5 C.

As shown in Embodiment 7 and Embodiments 35 to 38, when the primary particles and the secondary particles are the same material, with the increase of the content of the secondary particles, the C004/C110 ratio decreases, the cycle expansion rate of the battery decreases, and the capacity retention rate of the battery discharged at 5 C increases. That is because, with the increase of the content of secondary particles, isotropic particles increase, and therefore, the C004/C110 ratio decreases. During cycles, the stress generated by deintercalation and intercalation of lithium is released in all directions, and therefore, the expansion rate decreases. In addition, with the increase of the specific surface area, the diffusion speed of lithium ions increases, and therefore, the capacity retention rate of the battery discharged at 5 C increases. Therefore, preferably, the specific surface area of the negative electrode material is 0.5 m²/g to 7.0 m²/g. In this case, the capacity retention rate and the cycle performance of the electrochemical device are higher.

What is described above is merely exemplary embodiments of this application and the technical principles thereof. A person skilled in the art understands that the scope of disclosure in this application is not limited to the technical solutions formed by combining the foregoing technical features in the specified manner, but also covers other technical solutions formed by combining the foregoing technical features or equivalents thereof in any manner without departing from the conceptions disclosed above, for example, a technical solution formed by replacing any of the foregoing features with a technical feature disclosed herein and serving similar functions.

**Claims**

1. An electrochemical device, **characterized in that** the electrochemical device comprises:

    a positive electrode, a negative electrode, and a separator;
    the negative electrode comprises a negative electrode current collector and a negative electrode active material layer located on the negative electrode current collector; and a cross-section porosity at a depth of 10 $\mu$m from a surface of the negative electrode active material layer in a direction toward and perpendicular to the negative electrode current collector is $X_{10}$, satisfying $5\% \leq X_{10} \leq 25\%$, wherein the surface faces away from the negative electrode current collector.

2. The electrochemical device according to claim 1, **characterized in that** a cross-section porosity at depths of 10 to 20 $\mu$m from the surface in the direction toward and perpendicular to the negative electrode current collector is $X_{10\text{-}20}$, satisfying $10\% \leq X_{10\text{-}20} \leq 30\%$.

3. The electrochemical device according to claim 1, **characterized in that** a cross-section porosity at depths greater than 20 $\mu$m from the surface of the negative electrode active material layer and extend to a bottom of the negative electrode active material layer in the direction toward and perpendicular to the negative electrode current collector is $X_{>20}$, satisfying $15\% \leq X_{>20} \leq 40\%$, wherein the bottom is close to the negative electrode current collector.

4. The electrochemical device according to claim 1, **characterized in that** at least one of the following conditions (a) to (c) is satisfied:

    (a) a surface porosity of the negative electrode active material layer is $X_{surface}$, and $2\% \leq X_{surface} \leq 15\%$;
    (b) a compacted density of the negative electrode active material layer is 1.35 g/cm$^3$ to 1.70 g/cm$^3$; or
    (c) a single-side thickness of the negative electrode active material layer is 40 $\mu$m to 120 $\mu$m.

5. The electrochemical device according to claim 1, **characterized in that** the negative electrode active material layer contains a negative electrode material, and the negative electrode material satisfies at least one of the following conditions (d) to (i):

    (d) a surface of the negative electrode material contains a defect;
    (e) the surface of the negative electrode material contains amorphous carbon;
    (f) the surface of the negative electrode material contains a C-X structure, wherein C is a carbon element, and X is at least one selected from an H, N, S, B, P, O, Cl, or F element;
    (g) a particle size $D_{v50}$ of the negative electrode material satisfies: $12\ \mu\text{m} \leq D_{v50} \leq 20\ \mu\text{m}$;
    (h) a specific surface area of the negative electrode material is 0.5 m$^2$/g to 7.0 m$^2$/g; or
    (i) a compacted density of powder of the negative electrode material is greater than or equal to 1.85 g/cm$^3$.

6. The electrochemical device according to claim 1, **characterized in that** when 1 $\mu$L of electrolytic solution is dropped onto the surface of the negative electrode active material layer and keeps infiltrating for 5 seconds, a contact angle between an electrolyte droplet and the negative electrode active material layer is 0° to 90°.

7. The electrochemical device according to claim 1, **characterized in that** a result of a Raman test performed on particles in a 100 $\mu$m $\times$ 100 $\mu$m area of the negative electrode active material layer satisfies: $0.2 \leq I_d/I_g \leq 0.8$, wherein $I_d$ is a peak intensity of the particles of the negative electrode active material layer at 1350 cm$^{-1}$; and $I_g$ is a peak intensity of the particles of the negative electrode active material layer at 1580 cm$^{-1}$.

8. The electrochemical device according to claim 1, **characterized in that**

    the negative electrode material comprises primary particles and secondary particles;
    a ratio of a number of the primary particles to a number of the secondary particles is 1:9 to 5:5; and

an average particle size of the primary particles is 5 to 10 $\mu$m.

9. The electrochemical device according to claim 1, **characterized in that** the electrochemical device further comprises:

an electrolytic solution, wherein the electrolytic solution comprises a solvent, a lithium salt, and an additive; the solvent comprises carboxylate; the additive comprises at least one of fluoroethylene carbonate, $LiBF_4$, or ethylene sulfate; and
the lithium salt comprises $LiPF_6$.

10. An electronic device, **characterized in that** the electronic device comprises the electrochemical device according to any one of claims 1 to 9.

<10 µm

10~20 µm

>20 µm

Current collector

FIG. 1

FIG. 2

FIG. 3

## INTERNATIONAL SEARCH REPORT

| International application No. |
| --- |
| **PCT/CN2022/076319** |

| **A. CLASSIFICATION OF SUBJECT MATTER** |
| --- |
| H01M 4/133(2010.01)i; H01M 4/587(2010.01)i; H01M 10/0525(2010.01)i |
| According to International Patent Classification (IPC) or to both national classification and IPC |

| **B. FIELDS SEARCHED** |
| --- |
| Minimum documentation searched (classification system followed by classification symbols) |
| H01M |
| Documentation searched other than minimum documentation to the extent that such documents are included in the fields searched |
| |
| Electronic data base consulted during the international search (name of data base and, where practicable, search terms used) |
| CNABS; CNTXT; WPABSC; VEN; USTXT; EPTXT; WOTXT; CNKI: 电池, 负极, 阳极, 截面, 孔隙率, 空隙率, 压实密度, 电解液, 浸润性能, battery, anode, negative electrode, cross section, porosity, void ratio, compaction density, electrolyte |

| **C. DOCUMENTS CONSIDERED TO BE RELEVANT** | | |
| --- | --- | --- |
| Category* | Citation of document, with indication, where appropriate, of the relevant passages | Relevant to claim No. |
| PX | CN 113161515 A (NINGDE AMPEREX TECHNOLOGY LTD.) 23 July 2021 (2021-07-23) description, paragraphs [0004]-[0098] | 1-10 |
| X | JP 2009104900 A (MITSUI MINING & SMELTING CO., LTD.) 14 May 2009 (2009-05-14) description, paragraphs [0006]-[0042], and figure 1 | 1-10 |
| X | CN 111162275 A (NINGDE AMPEREX TECHNOLOGY LTD.) 15 May 2020 (2020-05-15) description, paragraphs [0004]-[0139] | 1-10 |
| A | CN 101159324 A (DONGGUAN AMPEREX TECHNOLOGY LTD.) 09 April 2008 (2008-04-09) entire document | 1-10 |
| A | CN 1983681 A (PANASONIC CORP.) 20 June 2007 (2007-06-20) entire document | 1-10 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 April 2022** | **25 April 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/076319**

| Patent document cited in search report | | | Publication date (day/month/year) | Patent family member(s) | | | Publication date (day/month/year) |
|---|---|---|---|---|---|---|---|
| CN | 113161515 | A | 23 July 2021 | None | | | |
| JP | 2009104900 | A | 14 May 2009 | None | | | |
| CN | 111162275 | A | 15 May 2020 | CN | 111162275 | B | 19 January 2021 |
| | | | | IN | 202117015827 | A | 20 August 2021 |
| | | | | EP | 3872904 | A1 | 01 September 2021 |
| | | | | EP | 3872904 | A4 | 08 December 2021 |
| | | | | WO | 2021134746 | A1 | 08 July 2021 |
| CN | 101159324 | A | 09 April 2008 | CN | 100580979 | C | 13 January 2010 |
| CN | 1983681 | A | 20 June 2007 | JP | 2007194076 | A | 02 August 2007 |
| | | | | US | 2007166613 | A1 | 19 July 2007 |
| | | | | KR | 20070077126 | A | 25 July 2007 |
| | | | | KR | 100827912 | B1 | 07 May 2008 |
| | | | | CN | 100490220 | C | 20 May 2009 |
| | | | | US | 7794878 | B2 | 14 September 2010 |
| | | | | JP | 5043338 | B2 | 10 October 2012 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110350908
- GB 190772016 T
- GB 195872017 T
- GB 245332009 T